# FASCICULE DE BREVET EUROPEEN

(11) **EP 4 423 461 B1**
(45) Date de publication et mention de la délivrance du brevet: **01.07.2026**
(21) Numéro de dépôt: 22818332.3
(22) Date de dépôt: 16.11.2022
(51) Int. Cl.: G01D 5/244

(54) **VERIN A CAPTEUR DE POSITION INTEGRE**
ZYLINDER MIT INTEGRIERTEM POSITIONSSENSOR
CYLINDER WITH INTEGRAL POSITION SENSOR

(30) Priorité: 19.11.2021 FR 2112268
(43) Date de publication de la demande: 04.09.2024
(73) Titulaire: UNIVERSITE D'EVRY-VAL-D'ESSONNE, 91000 Evry-Courcouronnes (FR)
(72) Inventeur: ALFAYAD, Samer, 91020 EVRY Cedex (FR); KARDOFAKI, Mohamad, 91020 EVRY Cedex (FR); SLEIMAN, Maya, 91020 EVRY Cedex (FR); ARLOT, Richard, 70700 BONNEVENT-VELLOREILLE (FR)
(74) Mandataire: Atout PI Laplace
(86) Numéro de dépôt international: PCT/EP2022/082142
(87) Numéro de publication internationale: WO 2023/088972

(56) Documents cités:
- EP-A1- 2 843 358
- EP-A2- 2 009 404
- WO-A1-94/07037
- DE-A1- 102015 102 233
- GB-A- 2 056 692
- US-A1- 2003 000 307

## Description

L'invention concerne un vérin à capteur de position intégré. Il existe de nombreux types de vérins utilisés comme actionneurs. Les vérins assurent le déplacement d'un organe mécanique par rapport à un point fixe. Le déplacement peut se faire en rotation ou en translation. Les vérins mettant en œuvre un déplacement en rotation sont généralement appelés vérins rotatifs et les vérins mettant en œuvre un déplacement en translation sont généralement appelés vérins linéaires.

Différentes formes d'énergie peuvent mouvoir la partie mobile du vérin. A titre d'exemple on peut notamment citer l'énergie électrique, pneumatique ou hydraulique qui permet de déplacer la partie mobile d'un vérin. L'invention peut être mise en œuvre quelle que soit le forme d'énergie utilisée pour mouvoir la partie mobile du vérin.

Un vérin est généralement un composant qui peut être acheté chez un fabricant spécialisé afin d'être intégré dans un système complexe. Dans ce système, il est utile de connaitre la position relative de la partie mobile du vérin par rapport à sa partie fixe, notamment pour asservir la position de la partie mobile. De nombreux capteurs de position indépendants des vérins existent et peuvent être intégrés dans les systèmes mettant en œuvre un vérin. A titre d'exemple, un capteur optique permet de visualiser la position de la partie mobile. Ce capteur est relié à un module de commande du vérin et permet d'en assurer le pilotage. Un autre exemple est donné dans le document WO 94/07037 A1 qui décrit un vérin équipé d'un capteur magnétique de position.

La mise en œuvre de capteurs extérieurs au vérin nécessite des raccordements qui peuvent présenter des risques, notamment du fait de la présence de pièces mécaniques en mouvement. La solution la plus couramment employée pour la transmission d'information entre un capteur mobile et un élément fixe du système consiste à raccorder le capteur au moyen de câbles électriques. Les câbles électriques courent le long des éléments de liaison reliant l'élément fixe à l'élément mobile portant le capteur. Les câbles doivent traverser les articulations reliant les différents éléments entre eux. Ces câbles risquent d'être endommagés lors de l'utilisation de l'équipement, par exemple par accrochage avec un objet extérieur. Il est possible de caréner ces câbles afin de les protéger. Les carénages constituent des pièces mécaniques supplémentaires occupant des volumes qui ne peuvent être dégagés. De plus, les câbles véhiculent souvent des signaux électriques de faible intensité, susceptibles d'être perturbés par l'environnement électromagnétique du système. Par exemple les capteurs de type piézo-électriques délivrent des signaux particulièrement faibles. Les câbles associés à ces capteurs ne peuvent être de grande longueur sous peine de dégradation de l'information issue du capteur.

L'invention propose l'intégration d'un capteur de position dans un vérin, ce qui permet de rendre les raccordements du capteur au vérin indépendants du système dans lequel le vérin est mis en œuvre. Cette intégration permet de simplifier la réalisation d'un système mettant en œuvre le vérin, les concepteurs du système n'ayant pas à se préoccuper de la mise en place et du raccordement du capteur. L'intégration du capteur permet de plus de maitriser le raccordement du capteur qui n'est lié qu'au vérin lui-même et pas à son environnement.

A cet effet, l'invention a pour objet un vérin comprenant deux éléments mobiles l'un par rapport à l'autre selon un axe de déplacement et un capteur de position configuré pour mesurer une position relative des deux éléments, le capteur de position comprenant une bande magnétique multipolaire solidaire d'un premier des deux éléments et un élément sensible à des variations de champ magnétique solidaire d'un second des deux éléments, la bande magnétique multipolaire présentant une alternance de pôles Nord et Sud s'étendant dans un intervalle définissant une étendue de mesure de la position relative selon l'axe de déplacement, l'élément sensible étant disposé de façon à détecter des variations de champ magnétique au voisinage de la bande magnétique multipolaire le long de l'axe de déplacement dans l'intervalle.

Les deux éléments sont mobiles en translation l'un par apport à l'autre, l'axe de mouvement étant un axe de translation, le vérin comprenant un corps et un piston solidaire d'une tige et mobile selon l'axe de translation par rapport au corps, le piston et la bande magnétique multipolaire possédant chacun une section circulaire perpendiculairement à l'axe de déplacement.

La bande magnétique multipolaire peut comprendre une alternance d'aimants permanents, les axes des pôles des aimants permanents étant perpendiculaires à l'axe de translation. Cette variante n'est pas revendiquée.

Selon l'invention la bande magnétique multipolaire comprend une alternance d'aimants permanents et de concentrateurs comprenant un matériau ferromagnétique, les axes des pôles des aimants permanents étant alors parallèles à l'axe de translation et les axes des pôles étant orientés de façon inversée pour tous couple d'aimants permanents consécutifs séparé par un concentrateur.

Les concentrateurs possèdent une forme dont une dimension parallèle à l'axe de translation augmente en se rapprochant de l'élément sensible.

Avantageusement, pour chaque concentrateur, au niveau d'une partie du concentrateur la plus éloignée de l'élément sensible, la dimension parallèle à l'axe de translation est conservée constante avec une variation de distance à l'élément sensible.

Avantageusement, le vérin comprend un concentrateur supplémentaire, l'élément sensible étant disposé entre la bande magnétique et le concentrateur supplémentaire.

Dans un mode de réalisation particulier, le premier des deux éléments comprend un corps du vérin, le second des deux éléments comprenant un piston et une tige solidaires l'un de l'autre, l'élément sensible étant fixé au piston, le vérin comprenant en outre une liaison filaire en forme de liaison télescopique disposée dans une chambre du vérin dans laquelle se déplace le piston la liaison filaire reliant l'élément sensible au corps du vérin et permettant de transmettre, de l'élément sensible vers le corps, des informations relatives aux variations de champ magnétique détectées par l'élément sensible.

Avantageusement, la bande magnétique multipolaire, solidaire du corps, forme une chemise dans laquelle est ajusté le piston.

Avantageusement, la tige du vérin comprend un espace interne creux s'étendant selon l'axe de déplacement et la bande magnétique est formée sur un doigt solidaire du corps, le doigt étant disposé dans l'espace interne creux.

Avantageusement, le vérin comprend en outre un capteur de force disposé sur la tige et transmettant vers le corps des mesures de force exercée par la tige selon l'axe de déplacement vers le corps au moyen de la liaison télescopique.

Dans un autre mode de réalisation particulier, le premier des deux éléments comprend un piston et une tige solidaires l'un de l'autre, le second des deux éléments comprend un corps du vérin, l'élément sensible étant fixé au corps.

L'invention sera mieux comprise et d'autres avantages apparaîtront à la lecture de la description détaillée d'un mode de réalisation donné à titre d'exemple, description illustrée par le dessin joint dans lequel :
La figure 1 représente en perspective un vérin linéaire dans lequel est intégré un capteur de position ;
La figure 2 représente en coupe un premier mode de réalisation d'un vérin selon l'invention ;
Les figures 3, 4 et 5 représentent des détails du premier mode de réalisation de la figure 2 ;
La figure 6 représente une variante du premier mode de réalisation d'un vérin selon l'invention ;
La figure 7 représente un deuxième mode de réalisation d'un vérin selon l'invention ;
La figure 8 représente un détail du deuxième mode de réalisation de la figure 7;
La figure 9 représente un troisième mode de réalisation d'un vérin selon l'invention ;
La figure 10 représente un détail du troisième mode de réalisation de la figure 9;
Les figures 11 et 12 représentent deux modes de réalisation d'une bande magnétique multipolaire équipant un vérin selon l'invention ;
Les figures 13, 14 et 15 représentent différentes variantes de concentrateurs équipant la bande magnétique multipolaire de la figure 12 ;
Les figures 16 et 17 représentent une variante de réalisation d'un vérin selon l'invention dans laquelle un concentrateur supplémentaire est ajouté.

Par souci de clarté, les mêmes éléments porteront les mêmes repères dans les différentes figures.

Les différentes figures décrivent plusieurs modes de réalisation d'un vérin linéaire. Il est bien entendu possible de mettre en œuvre l'invention pour un vérin rotatif dans lequel on cherche à déterminer la position angulaire de la partie mobile du vérin par rapport à sa partie fixe. De même, les vérins décrits mettent en œuvre une énergie hydraulique ou pneumatique pour les mouvoir. L'invention peut aussi être mise en œuvre avec des vérins utilisant d'autres formes d'énergie, notamment de l'énergie électrique.

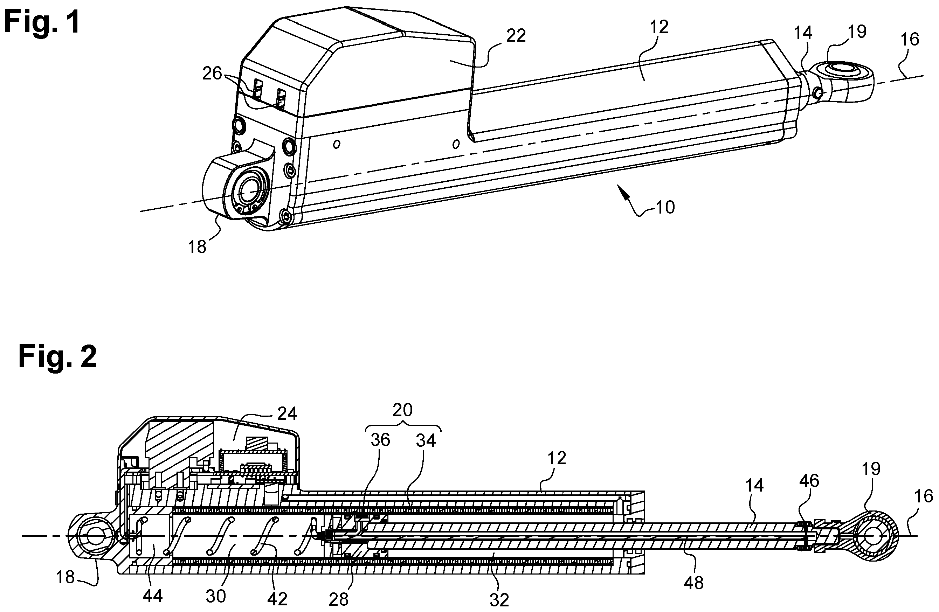

La figure 1 représente un vérin linéaire 10 en perspective. Le vérin 10 comprend un corps 12 et une tige 14 pouvant se déplacer en translation le long d'un axe 16 par rapport au corps 12 du vérin 10. Le vérin 10 comprend des moyens de fixation de son corps 12 et de sa tige 14 dans un système. Dans l'exemple représenté, le vérin 10 comprend un premier anneau 18 solidaire du corps et un second anneau 19 solidaire de la tige 14 et disposé en son extrémité sortant du corps 12. Les anneaux 18 et 19 permettent de fixer d'une part le corps 12 sur un bâti du système et d'autre part la tige 14 sur un objet mobile du système par rapport au bâti. Les anneaux 18 et 19 présentent l'avantage de fixer le vérin au moyen de liaisons pivot ou rotule au système. D'autres moyens de fixation sont également envisageables. Il est notamment possible de fixer le corps 12 au moyen d'une liaison complète. Le corps 12 possède une forme allongée dans laquelle est logée la tige 14. Dans l'exemple représenté, le corps 12 comprend une excroissance 22 dans laquelle un module de commande 24 du vérin peut être disposé. Une face de l'excroissance 22 peut présenter des connexions 26 permettant de raccorder le module de commande 24. Les connexions 26 peuvent véhiculer de l'énergie et des signaux de commande. L'énergie est apportée au vérin 10 sous une forme appropriée, par exemple pneumatique, hydraulique ou électrique.

La figure 2 représente un premier mode de réalisation de l'invention. La figure 2 représente en coupe le vérin 10 dans lequel est intégré un capteur de position 20 permettant de déterminer la position relative de la tige 14 dans son déplacement par rapport au corps 12 le long de l'axe 16. En pratique, par capteur de position, on entend aussi capteur de vitesse et capteur d'accélération. A partir de la position, il est possible d'obtenir une information de vitesse et/ou d'accélération en dérivant par rapport au temps l'information de position. A l'inverse, à partir d'un capteur de vitesse ou d'accélération, il est également possible d'obtenir une information de position au moyen d'une intégration par rapport au temps.

Dans l'exemple représenté, le vérin 10 est un vérin hydraulique. Plus précisément le vérin 10 comprend un piston 28 séparant deux chambres 30 et 32. La tige 14 est solidaire du piston. Les deux chambres sont réalisées dans un volume cylindrique s'étendant le long de l'axe 16. L'alimentation en fluide hydraulique des deux chambres 30 et 32 permet de déplacer le piston 28 en faisant varier la pression relative du fluide dans chacune des chambres 30 et 32. Le module de commande 24 peut comprendre un distributeur hydraulique permettant l'alimentation des chambres 30 et 32.

Le capteur de position 20 comprend une bande magnétique multipolaire 34 solidaire du corps 12 et un élément sensible 36 à des variations de champ magnétique au voisinage de la bande magnétique 34, le long de celle-ci. L'élément sensible 36 est solidaire du piston 28 et donc de la tige 14. La bande magnétique 34 présente une alternance de pôles Nord et Sud s'étendant dans un intervalle définissant une étendue de mesure de la position relative du piston 28 par rapport au corps 10 selon l'axe 16. L'étendue de mesure couvre avantageusement la totalité de la course du piston 28. Autrement dit, la bande magnétique 34 s'étend le long de l'axe 16 en regard de l'élément sensible 36 tout au long de sa course.

L'élément sensible 36 permet de détecter une variation de champ magnétique dans un secteur angulaire étroit autour d'une direction radiale par rapport à l'axe 16. La tige 14 se déplaçant en translation le long de l'axe 16, il est alors tout à fait possible de réaliser une bande magnétique 34 ne s'étendant radialement autour de l'axe 16 que dans le secteur angulaire où l'élément sensible 36 assure une détection. Cependant, le piston 28 peut avoir une section circulaire autour de l'axe 16. Le volume cylindrique délimitant les deux chambres 30 et 32 est ajusté au piston 28 et possède, comme le piston 28, la même section circulaire autour de l'axe 16. Cette section circulaire facilite la réalisation de l'étanchéité entre les deux chambres 30 et 32 et permet la rotation de l'anneau 19 solidaire de l'extrémité de la tige 14, rotation autour de l'axe 16. Cette rotation facilite la mise en place du vérin 10 dans son environnement en conservant à la tige 14 un degré de liberté en rotation. Pour permettre la rotation de la tige 14, et donc celle du piston 28, la bande magnétique 34 n'est pas limitée au secteur angulaire couvert par l'élément sensible 36 et possède, elle aussi une section circulaire autour de l'axe 16. Autrement dit, la bande magnétique 34 s'étend à la fois le long de l'axe 16 et aussi tout autour de celui-ci. Ainsi, l'élément sensible 36 peut tourner autour de l'axe 16, sans modification de ses mesures le long de l'axe 16. La bande magnétique 34 peut être utilisée comme paroi des chambres 30 et 32. Autrement dit, la bande magnétique 34 forme une chemise dans laquelle est ajusté le piston 28.

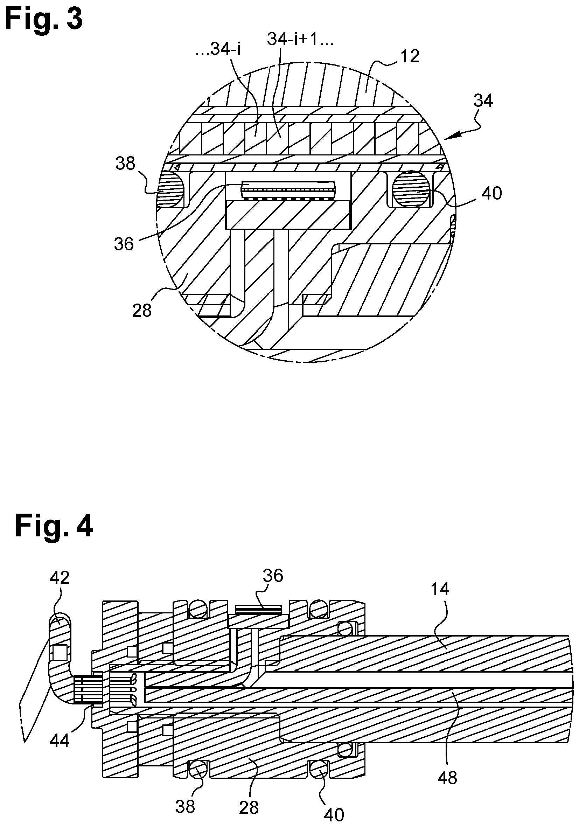

La figure 3 représente en coupe partielle le piston 28 et le corps 12 autour de l'élément sensible 36. De part et d'autre de l'élément sensible 36, le piston 28 est équipé de deux joints toriques 38 et 40 assurant respectivement l'étanchéité entre les chambres 30 et 32. En complément de l'étanchéité des chambres, les joints 38 et 40 permettent d'éviter que le fluide hydraulique, alimentant les chambres 30 et 32, ne vienne au contact de l'élément sensible 36. Toute autre forme de joint est également possible.

La bande magnétique 34 est formée d'anneaux 34-i empilés le long de l'axe 16. Les anneaux 34-i sont visibles par leur tranche sur la figure 3.

La figure 4 représente en coupe le piston 28 et en partie la tige 14. Le traitement de l'information issue de l'élément sensible 36 peut se faire dans le module de commande 24 solidaire du corps 12. Une liaison assure la transmission d'informations recueillies par l'élément sensible 36 et relatives aux variations de champ magnétique lors de son déplacement vers le module de commande 24. Cette liaison peut être sans fil et il peut être nécessaire de prévoir l'alimentation de L'élément sensible 36. Cette alimentation peut se faire au moyen d'une réserve d'énergie intégrée à l'élément sensible 36, par exemple une batterie intégrée dans le piston 28. Cette alimentation peut également se faire par transmission à distance, par exemple par induction magnétique.

Alternativement à une liaison sans fil reliant le module de commande 24 et l'élément sensible 36, il est possible de relier le module de commande 24 et l'élément sensible 36 au moyen d'une liaison filaire. Cette liaison peut alors assurer aussi bien la transmission d'informations recueillies par l'élément sensible 36 que l'alimentation de l'élément sensible 36. Un exemple de liaison filaire consiste en une liaison télescopique 42 reliant l'élément sensible 36 monté dans le piston 28 au corps 12 et plus précisément au module de commande 24. Il est possible de réaliser une liaison télescopique se déployant à l'extérieur du corps 12 et reliant le module de commande 24 et la tige 14. Alternativement, la liaison télescopique 42 est disposée à l'intérieur du corps 12, ce qui permet de la protéger vis-à-vis de possibles agressions extérieures, agressions mécaniques ou électromagnétiques. La liaison télescopique 42 peut être disposée dans un capot prévu à l'extérieur des chambres. Avantageusement, pour profiter de certains espaces déjà existants dans le vérin 10, comme représenté sur la figure 2, la liaison télescopique 42 possède une forme hélicoïdale s'enroulant dans une des chambres 30 ou 32 et notamment la chambre 30, ce qui permet d'éviter un capot supplémentaire à l'extérieur des chambres 30 et 32. Dans le cas où un fluide hydraulique est utilisé pour mouvoir le vérin 10, il est avantageux de recouvrir la liaison télescopique 42 d'un matériau étanche au fluide mis en œuvre. Dans le cas d'un vérin mû de façon pneumatique ou électrique, l'étanchéité de la liaison télescopique 42 n'est a priori pas utile. La chambre 30 comprend un volume 44 dans lequel la liaison télescopique 42 peut se ranger lorsque la tige 14 est dans sa position la plus rentrée dans le corps 12. Dans cette position de la tige 14, les spires de la liaison hélicoïdale 42 sont jointives et toutes disposées dans le volume 44. Lorsque la tige 14 sort du corps 12, les spires de la liaison hélicoïdale 42 s'écartent les unes des autres. Sur la figure 4, on distingue un connecteur 45 permettant de raccorder la liaison hélicoïdale 42 à l'élément sensible 36. Le connecteur 45 est avantageusement étanche.

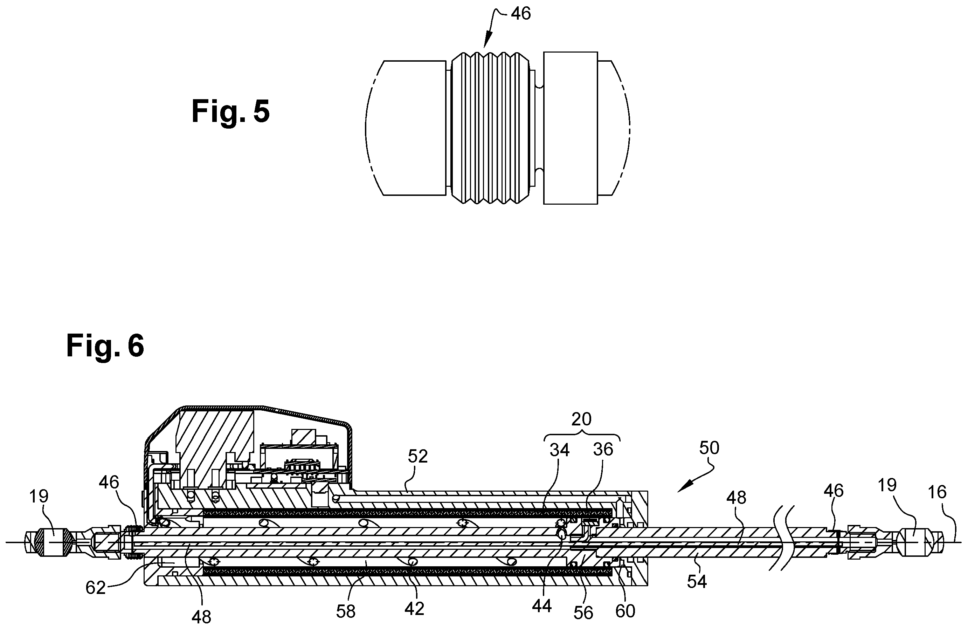

La figure 5 représente un capteur de force 46 pouvant équiper le vérin 10. Le capteur de force 46 permet de mesurer l'effort exercé par la tige 14 du vérin 10 lorsque le vérin 10 est manœuvré. Le capteur de force 46 est disposé sur la tige 14. Le capteur de force 46 comprend par exemple une ou plusieurs jauges de déformation placées sur une face externe de la tige 14. Lorsque la tige 14 exerce un effort selon l'axe 16 par exemple pour déplacer un objet fixé à l'anneau 19, les faces externes de la tige 14 se déforment. En mesurant cette déformation, on peut déterminer l'effort exercé par la tige 14. Le capteur de force 46 transmet l'information qu'il collecte vers le module de commande 24. Pour assurer cette transmission, il est avantageux d'utiliser la liaison hélicoïdale 42 déjà présente dans le vérin 10. Un câble 48 relie le connecteur 45 et le capteur de force 46.

La figure 6 représente un vérin 50 formant une variante du premier mode de réalisation. Le vérin 50 est connu sous le nom de vérin double tige. Plus précisément, le vérin 50 comprend un corps 52 et une tige 54 traversant le corps 52 de part en part selon l'axe de translation 16. Chaque extrémité de la tige 54 est équipée d'un élément de fixation comme par exemple un anneau 19 qu'il est possible de fixer à un objet à déplacer. Un piston 56 est solidaire de la tige 54. Le piston 56 sépare deux chambres 58 et 60. Le piston 56 est situé à mi-distance des extrémités de la tige 54. Sur la figure 6, la tige 54 est représentée en bout de course du côté droit de la figure. La chambre 60 est à son volume minimum et la chambre 58 à son volume maximum. On retrouve dans le vérin 50 le capteur de position 20 comprenant la bande magnétique multipolaire 34 solidaire du corps 52 et l'élément sensible 36 solidaire du piston 56. On retrouve également la liaison télescopique 42 reliant l'élément sensible 36 au corps 52. La liaison télescopique 42 est disposée en spirale autour de la tige 54 dans la chambre 58. Dans la position de la tige 54 représentée sur la figure 6, la liaison télescopique 42 est déployée au maximum. Dans la position extrême inverse où la chambre 58 occupe son volume minimum, la liaison télescopique 42 est rétractée au maximum et ses spires sont jointives et disposées dans le volume 62 semblable au volume 44. Dans le volume 62, les spires de la liaison télescopique 42 entourent la tige 54.

Le vérin 50 peut être équipé de deux capteurs de force 46, chacun disposé à une extrémité de la tige 54. Les capteurs de force 46 transmettent les informations qu'ils collectent au travers d'un câble 48 respectif, du connecteur 45 et de la liaison télescopique 42.

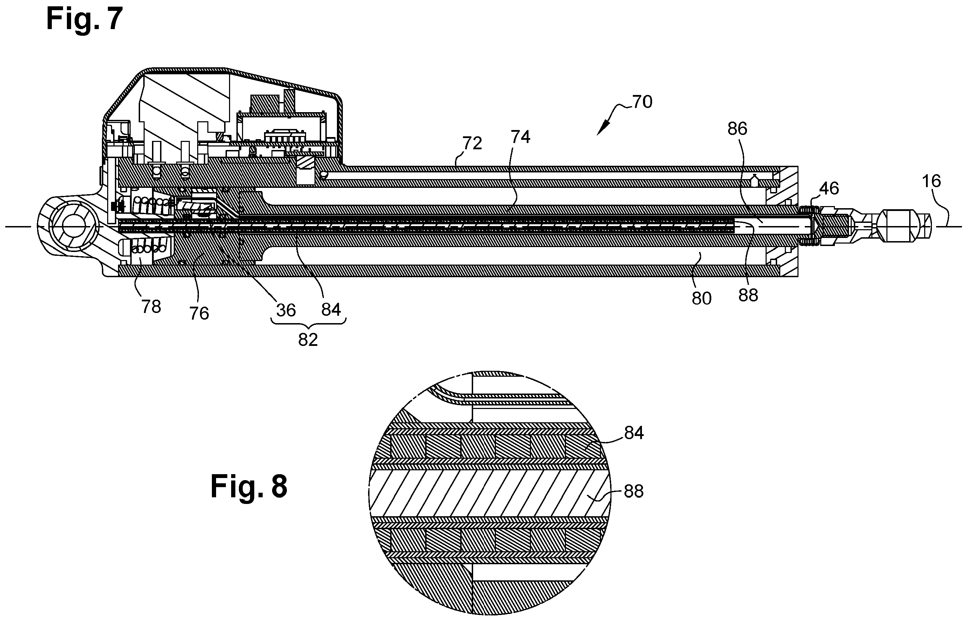

Les figures 7 et 8 illustrent un deuxième mode de réalisation de l'invention dans lequel dans un vérin 70 on retrouve un corps 72, une tige 74, un piston 76 solidaire de la tige 74 et délimitant deux chambres 78 et 80 ainsi qu'un capteur de position 82. Dans ce mode de réalisation, le capteur de position 82 comprend une bande magnétique 84 s'étendant à l'intérieur de la tige 74. Plus précisément, la tige 74 comprend un espace interne creux 86 s'étendant selon l'axe de translation 16. La bande magnétique 84 est formée sur un doigt 88 solidaire du corps 72. La tige 74 coulisse autour du doigt 88 et de la bande magnétique 84 le long de l'axe 16. L'élément sensible 36 est solidaire du piston 76 et est disposé en regard de la bande magnétique 84. Ce mode de réalisation présente l'intérêt d'une bande magnétique 84 de plus petite section. La section des chambres 78 et 80 peut être différente de celle de la bande magnétique 84. Plus précisément, dans le mode de réalisation représenté sur les figures 2 et 6, la bande magnétique 34 forme une chemise dans laquelle se déplace le piston 28 ou 56. La section de la bande magnétique 34 perpendiculairement à l'axe 16 est donc imposée par celle des chambres 30 et 32 pour la figure 1 et celle des chambres 58 et 60 pour la figure 6. En revanche, dans le mode de réalisation de la figure 7, la forme générale des sections d'une part des chambres 78 et 80 et d'autre part de la bande magnétique 84 peut être différentes. A titre d'exemple, les chambres 78 et 80 peuvent avoir une section de forme circulaire et la bande magnétique 84, une section de forme carrée.

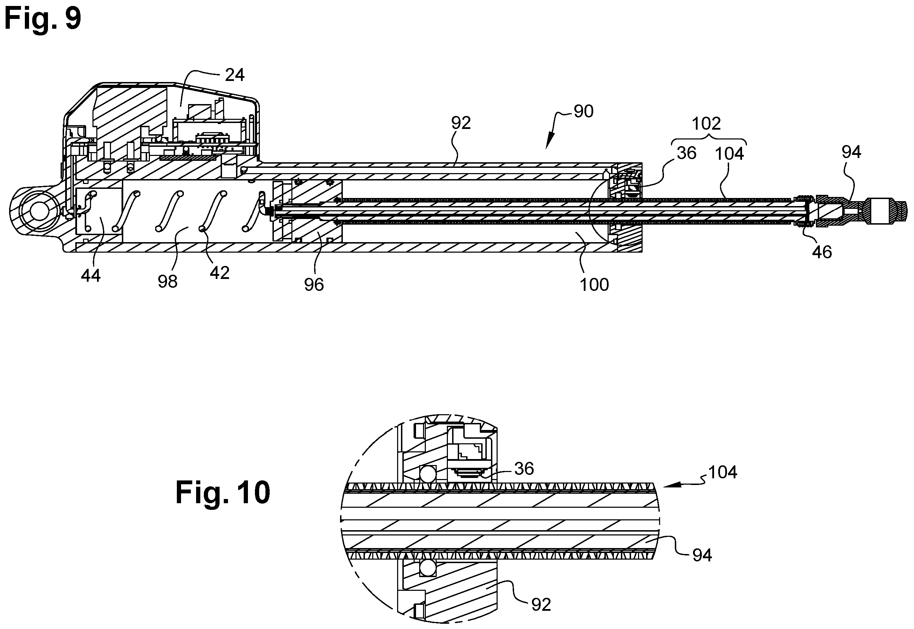

Les figures 9 et 10 illustrent un troisième mode de réalisation de l'invention dans lequel, dans un vérin 90, on retrouve un corps 92, une tige 94, un piston 96 solidaire de la tige 94 et délimitant deux chambres 98 et 100 ainsi qu'un capteur de position 102. Dans ce mode de réalisation, l'élément sensible 36 du capteur de position 102 est solidaire du corps 92. Le capteur de position 102 comprend également une bande magnétique 104 qui cette fois est solidaire de la tige 94. La bande magnétique 104 est disposée autour de la tige 94. Comme dans les autres modes de réalisation, l'élément sensible 36 est disposé en regard de la bande magnétique 104. L'intérêt principal de ce mode de réalisation est de simplifier le transfert d'information de l'élément sensible 36 vers le module de commande 24. Dans le cas où une liaison filaire est mise en œuvre entre l'élément sensible 36 et le module de commande 24, celle-ci ne nécessite pas de liaison télescopique 42. Cependant, une liaison télescopique 42 peut s'avérer utile pour raccorder un capteur de force 46 disposé comme précédemment sur la tige 94. On retrouve également le volume 44 dans lequel la liaison télescopique 42 peut se ranger lorsque la tige 94 est dans sa position la plus rentrée dans le corps 92.

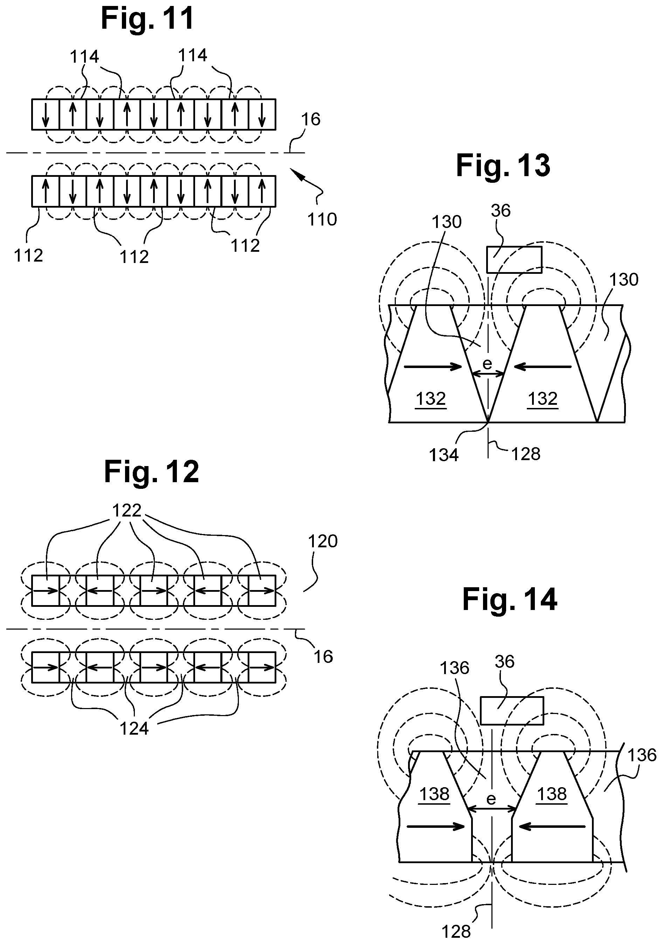

De façon générale la bande magnétique multipolaire, telle qu'apparaissant dans les différents modes de réalisation présente, face à l'élément sensible, une alternance de pôles Nord et Sud. Les figures 11 et 12 représentent deux modes de réalisation d'une bande magnétique multipolaire telle qu'apparaissant notamment sur les figures 2, 6 et 7 et équipant un vérin dont le piston se déplace en translation selon l'axe 16 par rapport au corps du vérin. Les bandes magnétiques représentées sur les figures 11 et 12 comprennent des aimants permanents. Par convention l'orientation des pôles magnétiques de chaque aimant permanent est représentée par une flèche dont la pointe représente le pôle Nord et dont la base représente le pôle Sud. Une convention inverse peut bien entendu être choisie.

la figure 11 représente une bande magnétique 110 comprenant des aimants permanents dont l'orientation des pôles est radiale par rapport l'axe de translation 16. La bande magnétique 110 comprend deux types d'aimants permanents 112 et 114 dont l'orientation des pôles est opposée afin de réaliser l'alternance des pôles. Les aimants permanents 112 ont leur pôle Nord orienté vers l'axe 16 et les aimants permanents 114 ont leur pôle Sud orienté vers l'axe 16. Pour réaliser l'alternance chaque aimant 112 est au contact d'un aimant permanent 114. Les aimants permanents 112 et 114 ont les mêmes diamètres intérieurs et extérieurs afin de réaliser une bande magnétique cylindrique autour de l'axe 16. Dans l'exemple représenté, les dimensions axiales ou épaisseur des deux types d'aimants permanents 112 et 114 sont identiques. Alternativement, il est possible de réaliser des aimants ayant des dimensions axiales différentes le long de la bande magnétique. Pour matérialiser une position particulière du piston par rapport au corps, il est par exemple possible de prévoir un aimant ayant une épaisseur différente des autres. D'autres combinaisons d'épaisseur d'aimants sont envisageables. Sur la figure 11, quelques lignes de champ magnétique sont représentées en trait pointillé, chacune entre un pôle Nord et un pôle Sud de deux aimants permanents 112 et 114 consécutifs. Dans le premier mode de réalisation du vérin, visible sur les figures 2 et 6, l'élément sensible 36 est situé à l'intérieur de la bande magnétique et les lignes de champ intérieures, c'est-à-dire les plus proches de l'axe 16 sont exploitées par l'élément sensible 36. Au contraire, dans le second mode de réalisation du vérin, visible sur la figure 7, l'élément sensible 36 est situé à l'extérieur de la bande magnétique et les lignes de champ extérieures, c'est-à-dire les plus éloignées de l'axe 16 sont exploitées.

Le mode de réalisation de la bande magnétique représenté sur la figure 11 impose deux types d'aimants permanents distincts. Il est également possible de réaliser une bande magnétique ne possédant qu'un seul type d'aimant permanent. La figure 12 représente une bande magnétique 120 réalisant l'alternance de pôles Nord et Sud au moyen d'un seul type d'aimant 122 dont l'axe des pôles est orienté axialement, c'est-à-dire parallèlement à l'axe 16. Pour réaliser l'alternance, pour tous couples d'aimants consécutifs l'orientation de chacun est inversée. Afin de guider les lignes de champ à l'extérieur et à l'intérieur de la bande magnétique 120, les aimants 122 sont tous séparés par un concentrateur 124 comprenant un matériau ferromagnétique. Autrement dit, la bande magnétique 120 comprend une alternance d'aimants permanents 122 et de concentrateurs 124. Comme sur la figure 11, quelques lignes de champ magnétique sont représentées en trait pointillé, chacune entre un pôle Nord et un pôle Sud d'un même aimant permanent 122. Ces lignes de champ traversent les concentrateurs 124 directement au contact de l'aimant permanent 122 concerné. L'épaisseur des concentrateurs 124 est définie de façon à limiter l'effet répulsif généré par l'inversion de l'orientation des pôles de deux aimants permanents 122 consécutifs. La présence des concentrateurs en matériaux ferromagnétique permet d'orienter les lignes de champ radialement dans un matériau ayant une plus forte perméabilité magnétique que l'air entrainant un effet de concentration du flux magnétique radialement à l'extérieur et à l'intérieur de la bande magnétique 120. Il est possible d'adapter l'épaisseur des concentrateurs 124 en fonction du type d'élément sensible 36 mis en œuvre. Par exemple un élément sensible de type magnétostrictif permet un concentrateur plus épais qu'un élément sensible à effet Hall.

Comme précédemment, il est possible réaliser une bande magnétique possédant des aimants permanents 122 ayant tous une même épaisseur. Il en est de même pour les concentrateurs 124. Pour des besoins particuliers, notamment permettant de repérer une position particulière du piston, il est possible de faire varier l'épaisseur des aimants permanents 122 et/ou des concentrateurs 124 le long de la bande magnétique 120.

Dans l'exemple représenté sur la figure 12, les aimants permanents 122 et les concentrateurs 124 ont chacun une épaisseur constante définie parallèlement à l'axe 16. Ainsi, on retrouve des lignes champ aussi bien à l'intérieur qu'à l'extérieur de la bande magnétique 120. Comme précédemment, la bande magnétique 120 peut être mise en œuvre en disposant l'élément sensible soit à l'intérieur, soit à l'extérieur de la bande magnétique 120.

Les figures 13 à 15 représentent plusieurs variantes de la bande magnétique 120 permettant de privilégier un côté de la bande magnétique. Sur ces figures, le champ magnétique est amplifié au-dessus de la bande magnétique et réduit au-dessous. En pratique, l'axe 16, non représenté, est horizontal et le dessus de la bande magnétique correspond au côté où l'élément sensible 36 est situé, c'est-à-dire soit à l'intérieur soit à l'extérieur de la bande magnétique.

Dans les différentes variantes des figures 13 à 15, les concentrateurs possèdent une forme dont une dimension parallèle à l'axe 16 augmente en se rapprochant de l'élément sensible 36. Sur les figures, 13 à 15 la dimension croissante est représentée par l'épaisseur e du concentrateur qui augmente en se rapprochant de l'élément sensible 36. Dans les exemples représentés sur les figures 13 à 15, la dimension e augmente de façon symétrique par rapport à un axe médian 128 séparant deux aimants permanents consécutifs. L'axe médian 128 est perpendiculaire à l'axe 16. En pratique, lorsque la bande magnétique est à symétrie de révolution autour de l'axe 16, l'axe médian 128 est un axe radial autour de l'axe 16. Cette croissance symétrique permet une variation symétrique de la détection du flux magnétique par l'élément sensible 36 de part et d'autre de l'axe médian 128. Alternativement, il peut être utile de prévoir une détection asymétrique obtenue par une croissance asymétrique de la dimension e de part et d'autre de l'axe médian 128. Cette asymétrie peut être utile par exemple pour détecter le sens de déplacement du piston.

Sur la figure 13, les concentrateurs 130 ont une section triangulaire dans un plan contenant l'axe 16. Pour une bande magnétique qui possède globalement une forme tubulaire à section cylindrique autour de l'axe 16, les concentrateurs 130 possèdent deux surfaces tronconiques ayant une ligne circulaire en commun formant le sommet 134 du triangle visible sur la figure 13. Les aimants permanents 132 possèdent des formes complémentaires permettant de conserver la forme globalement tubulaire de la bande magnétique. Dans l'exemple représenté, la section des aimants permanents 132 est trapézoïdale dans un plan contenant l'axe 16. Il est également possible de donner aux aimants permanents une section triangulaire ou aux concentrateurs 130 une section trapézoïdale dans un plan contenant l'axe 16.

Quelques lignes de champ magnétique sont représentées sur la figure 13. La forme ouverte des concentrateurs 130 en direction de l'élément sensible 36 permet de développer un champ magnétique plus important en direction de l'élément sensible qu'en s'éloignant de l'élément sensible.

La forme du concentrateur 130 de la figure 13 présente cependant un inconvénient au niveau du sommet 134. En ce point, la proximité des deux aimants permanents 132 tend à créer localement un flux magnétique important qui peut entrainer une saturation locale du concentrateur 130 le rendant inopérant à proximité du sommet 134. En effet, de façon générale, trois paramètres sont intéressants à considérer pour augmenter le champ magnétique au niveau de l'élément sensible : D'une part il est souhaitable d'augmenter l'induction rémanente des aimants permanents132. D'autre part, pour le concentrateur 130, il est souhaitable d'augmenter perméabilité du matériau et d'en réduire l'épaisseur e moyenne afin d'en améliorer l'efficacité. L'augmentation de l'induction rémanente de l'aimant permanent 132, l'augmentation de perméabilité et la diminution de l'épaisseur du concentrateur 130 ont cependant tendance à augmenter la zone où le matériau du concentrateur 130 sature.

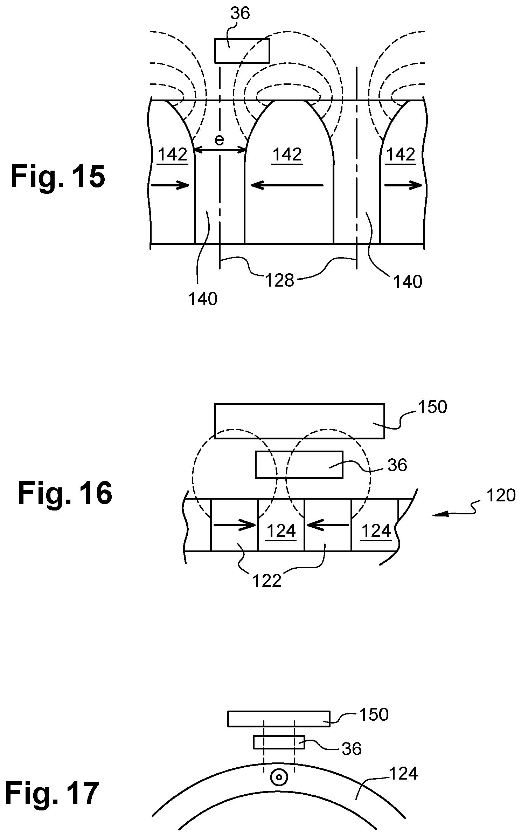

Les figures 14 et 15 décrivent des variantes de forme de concentrateur permettant de limiter le risque de saturation locale tout en conservant une forme du concentrateur ouverte en direction de l'élément sensible 36 sans en augmenter exagérément l'épaisseur. Sur la figure 14 un concentrateur 136 est disposé entre deux aimants permanents 138 et, sur la figure 15 un concentrateur 140 est disposé entre deux aimants permanents 142. Pour éviter une concentration trop importante du champ magnétique, au niveau de la partie du concentrateur 136 ou 140 la plus éloignée de l'élément sensible 36, l'épaisseur e est conservée constante avec une variation de distance à l'élément sensible 36. Par contre au niveau de la partie du concentrateur 136 ou 140 la plus proche de l'élément sensible 36, l'épaisseur e augmente avec une diminution de distance à l'élément sensible 36. Sur la figure 14, pour le concentrateur 136, l'épaisseur e augmente de façon linéaire comme pour le concentrateur 130 de la figure 13. Sur la figure 15, pour le concentrateur 140, l'augmentation d'épaisseur e augmente avec une diminution de distance à l'élément sensible 36. Les formes de concentrateur 130, 136 et 140 sont données à titre d'exemple. D'autres formes permettant d'augmenter l'efficacité du concentrateur en limitant le risque de saturation sont bien entendu possibles. La longueur de la partie du concentrateur où l'épaisseur e est conservée constante, longueur définie selon l'axe médian 128, peut être définie de façon empirique au moyen de mesure de champ magnétique au niveau de l'élément sensible 36 et sur la face de la bande magnétique opposée à l'élément sensible 36. Cette longueur dépend notamment de la forme et du matériau ferromagnétique des concentrateurs, ainsi que du flux magnétique généré par chaque aimant permanent afin d'éviter une saturation des concentrateurs.

Les figures 16 et 17 représentent une variante de réalisation d'un vérin selon l'invention dans laquelle un concentrateur supplémentaire 150 est ajouté. La figure 16 est une vue partielle en coupe dans un plan contenant l'axe 16 et la figure 17 est une vue partielle en coupe dans un plan perpendiculaire à l'axe 16. Dans cette variante de réalisation la bande magnétique 120 est reprise. Il est bien entendu possible d'y placer d'autres types de bandes magnétiques, comme la bande magnétique 110. L'élément sensible 36 est disposé entre la bande magnétique 120 et le concentrateur supplémentaire 150 qui permet de concentrer certaines lignes de champ magnétique afin de limiter la propagation du champ magnétique dans l'air. Ce concentrateur supplémentaire comprend, comme les autres concentrateurs disposés dans les bandes magnétiques, du matériau ferromagnétique.

## Revendications

1. Vérin comprenant deux éléments (12, 14 ; 52, 54 ; 72, 74 ; 92, 94) mobiles l'un par rapport à l'autre selon un axe de déplacement (16) et un capteur de position (20 ; 82 ; 102) configuré pour mesurer une position relative des deux éléments (12, 14 ; 52, 54 ; 72, 74 ; 92, 94), le capteur de position (20 ; 82 ; 102) comprenant une bande magnétique multipolaire (34 ; 84 ; 104) solidaire d'un premier (12 ; 52 ; 72 ; 94) des deux éléments et un élément sensible (36) à des variations de champ magnétique solidaire d'un second (14 ; 54 ; 74 ; 92) des deux éléments, la bande magnétique multipolaire (34 ; 84 ; 104) présentant une alternance de pôles Nord et Sud s'étendant dans un intervalle définissant une étendue de mesure de la position relative selon l'axe de déplacement (16), l'élément sensible (36) étant disposé de façon à détecter des variations de champ magnétique au voisinage de la bande magnétique multipolaire (34 ; 84 ; 104) le long de l'axe de déplacement (16) dans l'intervalle, dans lequel les deux éléments (12, 14 ; 52, 54 ; 72, 74 ; 92, 94) sont mobiles en translation l'un par apport à l'autre, l'axe de mouvement étant un axe de translation (16), le vérin (10 ; 50 ; 70 ; 90) comprenant un corps (12 ; 52 ; 72 ; 92) et un piston (28 ; 56 ; 76 ; 96) solidaire d'une tige (14 ; 54 ; 74 ; 94) et mobile selon l'axe de translation (16) par rapport au corps (12 ; 52 ; 72 ; 92), le piston (28 ; 56 ; 76 ; 96) et la bande magnétique multipolaire (34 ; 84 ; 104) possédant chacun une section circulaire perpendiculairement à l'axe de déplacement (16), dans lequel la bande magnétique multipolaire (120) comprend une alternance d'aimants permanents (122) et de concentrateurs (124) comprenant un matériau ferromagnétique, les axes des pôles des aimants permanents (122) étant parallèles à l'axe de translation (16), les axes des pôles étant orientés de façon inversée pour tous couple d'aimants permanents (122) consécutifs séparé par un concentrateur (124), **caractérisé en ce que** les concentrateurs (130 ; 136 ; 140) possèdent une forme dont une dimension (e) parallèle à l'axe de translation (16) augmente en se rapprochant de l'élément sensible (36).

2. Vérin selon la revendication 1, dans lequel pour chaque concentrateur (136 ; 140), au niveau d'une partie du concentrateur la plus éloignée de l'élément sensible (36), la dimension (e) parallèle à l'axe de translation (16) est conservée constante avec une variation de distance à l'élément sensible (36).

3. Vérin selon l'une des revendications précédentes, comprenant un concentrateur supplémentaire (150), l'élément sensible (36) étant disposé entre la bande magnétique (110 ; 120) et le concentrateur supplémentaire (150).

4. Vérin selon l'une des revendications précédentes, dans lequel le premier des deux éléments comprend un corps (12 ; 52 ; 72) du vérin (10 ; 50 ; 70), le second des deux éléments comprenant un piston (28 ; 56 ; 76) et une tige (14 ; 54 ; 74) solidaires l'un de l'autre, l'élément sensible (36) étant fixé au piston (28 ; 56 ; 76), le vérin (10 ; 50 ; 70) comprenant en outre une liaison filaire en forme de liaison télescopique (42) disposée dans une chambre (30) du vérin (10 ; 50 ; 70) dans laquelle se déplace le piston (28 ; 56 ; 76), la liaison filaire reliant l'élément sensible (36) au corps (12 ; 52 ; 72) du vérin (10 ; 50 ; 70) et permettant de transmettre, de l'élément sensible (36) vers le corps (12 ; 52 ; 72), des informations relatives aux variations de champ magnétique détectées par l'élément sensible (36).

5. Vérin selon la revendication 4, dans lequel la bande magnétique multipolaire (34), solidaire du corps (12 ; 52), forme une chemise dans laquelle est ajusté le piston (28 ; 56).

6. Vérin selon la revendication 4, dans lequel la tige (74) du vérin (70) comprend un espace interne creux (86) s'étendant selon l'axe de déplacement (16) et dans lequel la bande magnétique (84) est formée sur un doigt (88) solidaire du corps (72), le doigt (88) étant disposé dans l'espace interne creux (86).

7. Vérin selon l'une des revendications 4 à 6, comprenant en outre un capteur de force (46) disposé sur la tige (14 ; 54 ; 74) et transmettant vers le corps (12 ; 52 ; 72) des mesures de force exercée par la tige (14 ; 54 ; 74) selon l'axe de déplacement (16) vers le corps (12 ; 52 ; 72) au moyen de la liaison télescopique (42).

8. Vérin selon l'une des revendications 1 à 3, dans lequel le premier des deux éléments comprend un piston (96) et une tige (94) solidaires l'un de l'autre, le second des deux éléments comprend un corps (92) du vérin (90), l'élément sensible (36) étant fixé au corps.

## Patentansprüche

1. Zylinder, umfassend zwei Elemente (12, 14; 52, 54; 72, 74; 92, 94), die entlang einer Verschiebeachse (16) zueinander beweglich sind, und einen Positionssensor (20; 82; 102), der konfiguriert ist, um eine Position in Bezug zu den beiden Elementen (12, 14; 52, 54; 72, 74; 92, 94) zu messen, wobei der Positionssensor (20; 82; 102) ein mehrpoliges Magnetband (34; 84; 104) umfasst, das fest mit einem ersten (12; 52; 72; 94) der beiden Elemente verbunden ist, und ein Magnetfeldvariationen empfindliches Element (36), das fest mit einem zweiten (14; 54; 74; 92) der beiden Elemente verbunden ist, wobei das mehrpolige Magnetband (34; 84; 104) einen Nord- und Südpolwechsel aufweist, der sich in einem Intervall erstreckt, das einen Messbereich der Position in Bezug zur Verschiebeachse (16) definiert, wobei das empfindliche Element (36) angeordnet ist, um Magnetfeldvariationen in der Umgebung des mehrpoligen Magnetbandes (34; 84; 104) entlang der Verschiebeachse (16) in dem Intervall zu detektieren, wobei die beiden Elemente (12, 14; 52, 54; 72, 74; 92, 94) zueinander verschiebebeweglich sind, die Bewegungsachse eine Verschiebeachse (16) ist, der Zylinder (10; 50; 70; 90) einen Körper (12: 52; 72; 92) und einen Kolben (28; 56; 76; 96) umfasst, der fest mit einer Stange (14; 54; 74; 94) verbunden, und entlang der Verschiebeachse (16) in Bezug zum Körper (12; 52; 72; 92) beweglich ist, wobei der Kolben (28; 56; 76; 96) und das mehrpolige Magnetband (34; 84; 104) jeweils einen kreisförmigen Querschnitt senkrecht zur Verschiebeachse (16) besitzen, wobei das mehrpolige Magnetband (120) einen Dauermagnetenwechsel (122) und Konzentratoren (124) umfasst, die einen ferromagnetischen Werkstoff umfassen, wobei die Achsen der Pole der Dauermagneten (122) parallel zur Verschiebeachse (16) verlaufen, wobei die Achsen der Pole für jedes aufeinanderfolgende Dauermagnetenpaar (122), das durch einen Konzentrator (124) getrennt ist, umgekehrt ausgerichtet ist,
**dadurch gekennzeichnet, dass**
die Konzentratoren (130; 136; 140) eine Form besitzen, von der eine Abmessung (e) parallel zur Verschiebeachse (16) bei Annäherung an das empfindliche Element (36) zunimmt.

2. Zylinder nach Anspruch 1, wobei die Abmessung (e) parallel zur Verschiebeachse (16) für jeden Konzentrator (136; 140), im Bereich eines Teils des Konzentrators, der vom empfindlichen Element (36) am weitesten entfernt ist, konstant mit einer Abstandsvariation zum empfindlichen Element (36) beibehalten wird.

3. Zylinder nach einem der vorstehenden Ansprüche, umfassend einen zusätzlichen Konzentrator (150), wobei das empfindliche Element (36) zwischen dem Magnetband (110; 120) und dem zusätzlichen Konzentrator (150) angeordnet ist.

4. Zylinder nach einem der vorstehenden Ansprüche, wobei das erste der beiden Elemente einen Körper (12; 52; 72) des Zylinders (10; 50; 70) umfasst, das zweite der beiden Elemente einen Kolben (28; 56; 76) und eine Stange (14; 54; 74) umfasst, die fest miteinander verbunden sind, wobei das empfindliche Element (36) am Kolben (28; 56; 76) fixiert ist, der Zylinder (10; 50; 70) weiter eine Drahtverbindung in Form einer teleskopischen Verbindung (42) umfasst, die in einer Kammer (30) des Zylinders (10; 50; 70) angeordnet ist, in der sich der Kolben (28; 56; 76) verschiebt, wobei die Drahtverbindung das empfindliche Element (36) mit dem Körper (12; 52; 72) des Zylinders (10; 50; 70) verbindet, und es ermöglicht, Informationen in Bezug auf Magnetfeldvariationen, die von dem empfindlichen Element (36) detektiert werden, vom empfindlichen Element (36) zum Körper (12; 52; 72) zu übertragen.

5. Zylinder nach Anspruch 4, wobei das mehrpolige Magnetband (34), das fest mit dem Körper (12; 52) verbunden ist, eine Laufbuchse bildet, in welcher der Kolben (28; 56) angepasst ist.

6. Zylinder nach Anspruch 4, wobei die Stange (74) des Zylinders (70) einen inneren Hohlraum (86) umfasst, der sich entlang der Verschiebeachse (16) erstreckt, und in dem das Magnetband (84) auf einem fest mit dem Körpers (72) verbundenen Stift (88) gebildet wird, wobei der Stift (88) im inneren Hohlraum (86) angeordnet ist.

7. Zylinder nach einem der Ansprüche 4 bis 6, weiter umfassend einen Kraftsensor (46), der auf der Stange (14; 54; 74) angeordnet ist, und zum Körper (12; 52; 72) Messwerte einer Kraft überträgt, die entlang der Verschiebeachse (16) zum Körper (12; 52; 72) mittels der Teleskopverbindung (42) von der Stange (14; 54; 74) ausgeübt wird.

8. Verfahren nach einem der Ansprüche 1 bis 3, wobei das erste der beiden Elemente einen Kolben (96) und eine Stange (94) umfasst, die fest miteinander verbunden sind, wobei das zweite der beiden Elemente einen Körper (92) des Zylinders (90) umfasst, wobei das empfindliche Element (36) am Körper fixiert ist.

## Claims

1. Cylinder comprising two elements (12, 14; 52, 54; 72, 74; 92, 94) movable relative to one another along an axis of movement (16) and a position sensor (20; 82; 102) configured to measure the relative position of the two elements (12, 14; 52, 54; 72, 74; 92, 94), the position sensor (20; 82, 102) comprising a multipole magnetic strip (34; 84; 104) secured to a first (12; 52; 72; 94) of the two elements and an element (36) that is sensitive to variations in magnetic field secured to a second (14; 54; 74; 92) of the two elements, the multipole magnetic strip (34; 84, 104) having alternating north and south poles extending into an interval defining an area for measuring the relative position along the axis of movement (16), the sensitive element (36) being arranged so as to detect variations in magnetic field near the multipole magnetic strip (34; 84; 104) along the axis of movement (16) within the interval, wherein the two elements (12, 14; 52, 54; 72, 74; 92, 94) are movable in translation against one another, the axis of movement being an axis of translation (16), the cylinder (10; 50; 70; 90) comprising a body (12; 52; 72; 92) and a piston (28; 56; 76; 96) that is secured to a rod (14; 54; 74; 94) and movable along the axis of translation (16) relative to the body (12; 52; 72; 92), the piston (28; 56; 76; 96) and the multipole magnetic strip (34; 84; 104) each having a circular cross-section perpendicularly to the axis of movement (16), wherein the multipole magnetic strip (120) comprises alternating permanent magnets (122) and concentrators (124) comprising a ferromagnetic material, the axes of the poles of the permanent magnets (122) being parallel to the axis of translation (16), the axes of the poles being invertedly oriented for all consecutive pairs of permanent magnets (122) separated by a concentrator (124),
**characterized in that**
the concentrators (130; 136; 140) have a shape of which a dimension (e) parallel to the axis of translation (16) increases by moving closer to the sensitive element (36).

2. Cylinder according to claim 1, wherein for each concentrator (136; 140), at a part of the concentrator farthest away from the sensitive element (36), the dimension (e) parallel to the axis of translation (16) is kept constant with a distance variation to the sensitive element (36).

3. Cylinder according to any one of the preceding claims, comprising an additional concentrator (150), the sensitive element (36) being arranged between the magnetic strip (110; 120) and the additional concentrator (150).

4. Cylinder according to any one of the preceding claims, wherein the first of the two elements comprises a body (12; 52; 72) of the cylinder (10; 50; 70), the second of the two elements comprising a piston (28; 56; 76) and a rod (14; 54; 74) that are secured to one another, the sensitive element (36) being fixed to the piston (28; 56; 76), the cylinder (10; 50; 70) further comprising a wired connection in the form of a telescopic connection (42) arranged in a chamber (30) of the cylinder (10; 50; 70), wherein the piston moves (28; 56; 76), the wired connection connecting the sensitive element (36) to the body (12; 52; 72) of the cylinder (10; 50; 70) and making it possible to transmit, from the sensitive element (36) to the body (12; 52; 72), information relating to the variations in magnetic field detected by the sensitive element (36).

5. Cylinder according to claim 4, wherein the multipole magnetic strip (34), that is secured to the body (12; 52), forms a sleeve, wherein the piston (28; 56) is adjusted.

6. Cylinder according to claim 4, wherein the rod (74) of the cylinder (70) comprises a hollow internal space (86) extending along the axis of movement (16), and wherein the magnetic strip (84) is formed on a finger (88) that is secured to the body (72), the finger (88) being arranged in the hollow internal space (86).

7. Cylinder according to any one of claims 4 to 6, further comprising a force sensor (46) arranged on the rod (14; 54; 74) and transmitting to the body (12; 52; 72), measurements of force exerted by the rod (14; 54; 74) along the axis of movement (16) to the body (12; 52; 72) by means of the telescopic connection (42).

8. Cylinder according to any one of claims 1 to 3, wherein the first of the two elements comprises a piston (96) and a rod (94) that are secured to one another, the second of the two elements comprises a body (92) of the cylinder (90), the sensitive element (36) being fixed to the body.
